# EUROPÄISCHE PATENTSCHRIFT

(11) **EP 0 821 028 B1**
(45) Veröffentlichungstag und Bekanntmachung des Hinweises auf die Patenterteilung: **06.05.2004**
(21) Anmeldenummer: 97112046.4
(22) Anmeldetag: 15.07.1997
(51) Int. Cl.: C08J 9/20, C08F 255/02

(54) **Expandierbare Styrolgraftcopolymerisate**
Expandable styrene graft copolymer
Copolymère greffé et expansible de styrène

(30) Priorität: 24.07.1996 DE 19629791
(43) Veröffentlichungstag der Anmeldung: 28.01.1998
(73) Patentinhaber: BASF AKTIENGESELLSCHAFT, 67056 Ludwigshafen (DE)
(72) Erfinder: Batscheider, Karl-Heinz, 67112 Mutterstadt (DE); Hahn, Klaus, Dr., 67281 Kirchheim (DE); Braun, Frank, Dr., 67063 Ludwigshafen (DE); Rösch, Joachim, Dr., 67063 Ludwigshafen (DE)

(56) Entgegenhaltungen:
- DE-A- 2 440 026
- US-A- 4 785 022

## Beschreibung

Die Erfindung betrifft perlförmige expandierbare Styrolpolymerisate (EPS) mit gutem Expandiervermögen.

Schaumstoffe auf Basis von Styrolpolymerisaten haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart von Treibmitteln EPS-Perlen hergestellt und diese durch Erhitzen zu Schaumstoffpartikel aufschäumt und anschließend in Formen zu Formteilen verschweißt.

Für die Verarbeitung treibmittelhaltiger EPS-Perlen ist das Expandiervermögen eine wichtige Eigenschaft. Hohes Expandiervermögen bedeutet für die Herstellung von Schaumstoffpartikeln aus EPS, daß mit vergleichbaren Treibmittelmengen zu niedrigeren Schüttdichten bzw. wesentlich schneller aufgeschäumt werden kann oder vergleichbare Schüttdichten mit wesentlich geringeren Treibmittelmengen erreicht werden.

Zur Erzielung möglichst geringer Schüttdichten und einer hohen Expandiergeschwindigkeit wird üblicherweise die Suspensionspolymerisation zur Herstellung von EPS in Gegenwart von Kettenreglern, wie z.B. dimerem α-Methylstyrol durchgeführt. Dies ist jedoch von beschränkter Wirksamkeit und führt darüber hinaus zu einer Erniedrigung des Molekulargewichts und damit der Schmelzeviskosität des Polystyrols. Dies hat bei hohen Mengen an Kettenregler die Folge, daß kein dimensionsstabiler Schaumstoffkörper hergestellt werden kann.

Aufgabe der vorliegenden Erfindung war es, ein perlförmiges, expandierbares Styrolpolymerisat mit verbesserter Expandierbarkeit bereitzustellen, ohne die übrigen Verarbeitungs- und Produkteigenschaften negativ zu beeinflussen.

Diese Aufgabe wird erfindungsgemäß durch ein expandierbares Styrolpolymerisat gelöst, das 1 bis 20 Gew.-% eines oligomeren Olefins mit 2 bis 20 Kohlenstoffatomen und einem Polymerisationsgrad von 2 bis 200 enthält.

Ein weiterer Gegenstand der Erfindung sind Verfahren zur Herstellung von perlförmigen expandierbaren Styrolpolymerisaten, bei denen 1 bis 20 Gew.-% des oligomeren Olefins zugesetzt werden.

Es ist bekannt, daß Polyisobutylene als Elastifizierungsmittel (EP-A 397 001) für Schaumpolystyrol wirken, und daß man Polyethylenwachse bei der Herstellung von EPS als Keimbildner zusetzen kann (DE-A 32 43 885). In beiden Fällen handelt es sich um bei Raumtemperatur feste Substanzen, die zur Verbesserung des Expandiervermögens ungeeignet sind.

Nach DE-A 24 40 026 werden bei der Suspensionspolymerisation zur Herstellung von EPS als Kernbildner zur Verringerung der Zellgröße 0,02 bis 0,15 Gew.-%, bezogen auf Styrol, eines niedermolekularen, flüssigen Polyisobutylens zugesetzt. Nach der Lehre dieser Druckschrift hätte man erwarten müssen, daß bei einer weiteren Erhöhung der zugesetzten Menge Polyisobutylen über 0,2 Gew.-% hinaus die Zellgröße drastisch auf extrem niedrige Werte absinkt. Dies ist aber überraschenderweise nicht der Fall. Die Druckschrift erteilt jedenfalls nicht die Lehre, zur Verbesserung des Expandiervermögens Isobuten-Oligomere in Mengen von 0,2 Gew.-% und mehr zuzusetzen.

Die US-A 4,785,022 beschreibt Trinkbecher aus Schaumpolystyrol, die durch Verschäumen und Versintern von expandierbaren Perlen erhalten werden. Diese Perlen werden wiederum hergestellt durch Imprägnieren von mit 0,05 bis 0,75 Gew.-% eines Buten- oder Isobuten-Oligomeren beschichteten Polystyrolgranulats mit einem Treibmittel in wäßriger Suspension. Das Oligomere soll die Bildung von Poren im Schaumpolystyrol und damit Undichtigkeiten im Trinkbecher verhindern. Von einer Verbesserung der Expandierbarkeit der expandierbaren Perlen ist nicht die Rede.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten. Bei der Herstellung des erfindungsgemäßen EPS kommen daher als Comonomere z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, oder auch geringe Mengen an Verbindungen, die zwei polymerisierbare Doppelbindung enthalten, wie Butadien, Divinylbenzol oder Butandioldiacrylat.

Als Treibmittel werden, bezogen auf das Styrolpolymerisat, im allgemeinen 1 bis 10 Gew.-%, vorzugsweise 3 bis 8 Gew.-%, eines C₃- bis C₇-Kohlenwasserstoffs (wie Propan, Butan, Isobutan, n-Pentan, i-Pentan, Neopentan und/oder Hexan) und/oder Kohlendioxid eingesetzt.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindung, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Ruß, Graphit, Schmiermittel, Füllstoffe und beim Vorschäumen antiverklebend wirkende Stoffe, wie Zinkstearat, Melaminformaldehydkondensate oder Kieselsäure.

Die Zusatzstoffe können je nach der beabsichtigten Wirkung in den Teilchen homogen verteilt oder als Oberflächenbeschichtung vorliegen. Entsprechend werden die Zusatzstoffe im erfindungsgemäßen Verfahren zugegeben oder anschließend auf die erfindungsgemäß hergestellten expandierbaren Styrolpolymerisate aufgebracht.

Bei einem bevorzugten Verfahren werden perlförmige expandierbare Styrolpolymerisate hergestellt durch Polymerisation von Styrol, gegebenenfalls zusammen mit bis zu 50 Gew.-% der obengenannten Comonomeren, in wäßriger Suspension, wobei vor, während oder nach der Polymerisation die oben beschriebenen Treibmittel und gegebenenfalls übliche Zusatzstoffe in wirksamen Mengen zugesetzt werden. Das Verfahren wird in Gegenwart eines Suspensionsstabilisators durchgeführt, z.B. Polyvinylpyrrolidon, Polyvinylalkohol und Hydroxyethylcellulose, sowie Pickering-Stabilisatoren, wie z.B. Magnesiumphosphat oder Tricalciumphosphat. Ferner können die erfindungsgemäßen Styrolpolymerisate auch dadurch hergestellt werden, daß man die Oligomeren einer Schmelze des Styrolpolymerisates zusetzt, vorzugsweise in einem Extruder. Hierbei kann das Treibmittel direkt in die Schmelze inkorporiert werden. Der extrudierte Strang wird abgekühlt und zu perlförmigem Granulat zerschnitten.

Erfindungsgemäß werden bei der EPS-Herstellung 1 bis 20, vorzugsweise 1 bis 10 Gew.-%, bezogen auf die Monomeren, eines oligomeren aliphatischen Olefins mit 2 bis 20, vorzugsweise 3 bis 5 Kohlenstoffatomen, und einem Polymerisationsgrad von 2 bis 200, vorzugsweise 2 bis 100 und insbesondere 5 bis 50 zugesetzt. Auch Co-Oligomere sind geeignet. Die oligomeren Olefine können mit klassischen Ziegler-Natta-Katalysatoren hergestellt werden. Besonders bevorzugt sind oligomere aliphatische Olefine, die endständige-Doppelbindungen aufweisen. Dabei ist es nicht unbedingt erforderlich, daß alle Kettenenden der Oligomeren Doppelbindungen tragen, es sollte aber die überwiegende Zahl sein. Die Molekulargewichtsverteilung Mw:Mn derartiger Olefin-Oligomerer liegt vorzugsweise im Bereich von 1,0 bis 2,4. Die Olefin-Oligomeren können beispielsweise durch Polymerisation der entsprechenden Olefine mit Metallocen-Katalysatoren hergestellt werden, wie es in der deutschen Patentanmeldung P 195 03 089.3 beschrieben ist.

Die im erfindungsgemäßen Verfahren erhaltenen perlförmigen, expandierbaren Styrolpolymerisate werden nach beendeter Polymerisation auf bekannte Weise von der wäßrigen Phase abgetrennt, gewaschen und getrocknet.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 0,005 und 0,1 g/cm³ ausgeschäumt werden.

Die vorgeschäumten Teilchen können dann nach üblichen Verfahren zu Schaumstoff-Formteilen mit einer Dichte von 0,005 bis 0,1 g/cm³ ausgeschäumt werden.

Die in den Beispielen genannten Teile und Prozente beziehen sich auf das Gewicht.

### Beispiele

### Herstellung der Olefin-Oligomeren

### A. Propen-Oligomer

In einem 1 l-Rührautoklaven wurden 16 ml einer 1,7 molaren Methylaluminoxan-Lösung in Toluol vorgelegt, 500 g (11,9 mol) flüssiges Propen aufkondensiert und auf 50°C erwärmt. Dabei stellte sich ein Druck von 2200 kPa ein. Anschließend wurden 79,6 mg (0,1 mmol) Bis(n-Octadecylcyclopentadienyl)zirconiumdichlorid, gelöst in 9,4 ml 1,7 molarer toluolischer Methylaluminoxanlösung (Al : Zr = 432 : 1) zugegeben. Dann wurde 120 Minutenlang oligomerisiert, der Reaktor entspannt und die Trübungszahl bestimmt. Sie betrug 1,8. Es wurden 450 g flüssiges Propenoligomerengemisch isoliert: Mw = 990, Mn = 520, Mw/Mn = 1,9.

Endständige Doppelbindungen (nach 1H-NMR) 100 %

### B. Isobuten-Oligomer

In einer kontinuierlich arbeitenden Polymerisationsapparatur wurden pro Stunde 12 kg Isobuten mit 8 g/h (= 1,4 mmol/h/mol Isobuten) BF₃ unter kräftigem Rühren und guter Kühlung bei -20°C und 2,3 bar polymerisiert. Die mittlere Verweilzeit betrug 3 Minuten. Danach wurde die Polymerisation mit 3 g Methanol/kg Reaktionsaustrag abgebrochen, wonach die Restgase, das Methanol und die niederen Oligomeren destillativ entfernt wurden.

Mn = 1050 g/mol, Mw = 1900 g/mol
Endständige Doppelbindungen (nach 1H-NMR) 85 %

### Polymerisation

### Beispiel 1

In einen druckfesten Rührkessel wurde eine Mischung aus 195 Teilen Wasser, 0,39 Teilen Natriumpyrophosphat, 0,58 Teilen Magnesiumsulfat, 170 Teilen Styrol, 8,5 Teilen Propen-Oligomer A, 0,34 Teilen Dibenzoylperoxid und 0,51 Teilen Dicumylperoxid gegeben.

Unter Rühren wurde innerhalb von zwei Stunden auf 90°C erwärmt. 50 Minuten nach Erreichen von 80°C wurden 4,9 Teile einer 10%igen wäßrigen Lösung von Polyvinylpyrrolidon zugegeben. Dann wurde in vier Stunden von 90°C auf 134°C erwärmt. 195 Minuten nach Erreichen von 80°C wurden 13,3 Teile Pentan zugegeben. Abschließend wurde weitere vier Stunden bei 134°C gerührt. Das erhaltene Rohprodukt wurde isoliert und getrocknet.

### Beispiel 2

Es wurde wie in Beispiel 1 verfahren; allerdings wurden 7,15 Teile Pentan eingesetzt.

### Beispiel 3

Es wurde wie in Beispiel 1 verfahren; allerdings wurden an Stelle des Propen-Oligomers 8,5 Teile des Isobuten-Oligomers B eingesetzt.

### Beispiel 4

Es wurde wie in Beispiel 3 verfahren; allerdings wurden 7,15 Teile Pentan eingesetzt.

### Beispiel 5 (Vergleich)

Es wurde wie in Beispiel 1 verfahren; allerdings wurden an Stelle des Oligomeren 0,11 Teile dimeres α-Methylstyrol (DMS) eingesetzt.

### Beispiel 6 (Vergleich)

Es wurde wie in Beispiel 1 verfahren; allerdings wurden 8,6 Teile Pentan und an Stelle des Oligomeren 0,34 Teile DMS eingesetzt.

### Beispiel 7 (Vergleich)

Es wurde wie in Beispiel 1 verfahren; allerdings wurden 8,0 Teile Pentan eingesetzt. Auf die Zugabe von Oligomeren und DMS wurde verzichtet.

### Beispiel 8 (Vergleich)

Es wurde wie in Beispiel 1 verfahren; allerdings wurden 6,3 Teile Pentan und an Stelle des Oligomeren 0,6 Teile DMS eingesetzt.

### Aufarbeitung

Die erhaltenen expandierbaren Polystyrolperlen wurden mit vollentsalztem Wasser gewaschen und in Luftstrom von Oberflächenwasser befreit. Das so getrocknete Produkt wurde mit 0,2 Gew.-% Zinkstearat, bezogen auf das Polymer, vorbeschichtet und anschließend in Siebfraktionen aufgetrennt.

100 Teile des expandierbaren Polystyrol-Granulates mit der Perlgrößenfraktion von 1,0 bis 2,0 mm Durchmesser wurden durch auftrommeln im Schaufelmischer mit 0,2 Teilen Glycerinmonostearat beschichtet.

### Vorschäumen der EPS-Perlen

Ein Teil der beschichteten Perlen wurde in einem diskontinuierlichen Vorschäumer mit strömendem Wasserdampf beaufschlagt. Unter standardisierten Bedingungen (EPS-Einwaage: 100 g) konnte das Expandiervermögen quantifiziert werden. Die erhaltenen Daten sind in der Tabelle 1 angegeben. Die Ergebnisse für die Produkte aus den Beispielen 1, 3 und 5 zeigen, daß bei gleichem Treibmittelgehalt nach einer Schäumzeit von 1 Minute mit oligomerhaltigen Produkten eine niedrigere Schüttdichte erreicht wird, d.h. schneller aufgeschäumt werden kann.

In den übrigen Beispielen wurde solange geschäumt, bis die geringst mögliche Schüttdichte erreicht war. Hier zeigt sich, daß bei nahezu gleichem Treibmittelgehalt mit oligomerhaltigen Produkten eine niedrigere minimale Schüttdichte bei kürzerer Vorschäumzeit erreicht wird (Bspe. 4 und 7). Vergleichbare Schüttdichten werden mit oligomerhaltigen Polymerisaten mit geringeren Treibmitteln und bei kürzerer Vorschäumzeit erreicht (Bspe. 2 und 6) .

**Tab. 1**

| Verhalten beim Vorschäumen (Produkte aus Bsp. 1-8) | | | | | |
|---|---|---|---|---|---|
| Beispiel | Oligomer^{a} | DMS^{a} | Pentangehalt^{b} | Schüttdichte [g/l] | Vorschäumzeit [min] |
| 1 | 5,0 | --- | 6,3 | 19,2 | 1 |
| 3 | 5,0 | --- | 6,3 | 19,2 | 1 |
| 5 | --- | 0,065 | 6,2 | 23,0 | 1 |
| | | | | | |
| 2 | 5,0 | --- | 3,3 | 16,7^{c} | 2,5 |
| 6 | --- | 0,2 | 4,0 | 16,1^{c} | 6 |
| 7 | --- | --- | 3,8 | 35,0^{c} | 20 |
| 4 | 5,0 | --- | 3,6 | 18,5^{c} | 7 |
| 8 | --- | 0,35 | 2,8 | 21,7^{c} | 20 |

| | | | | | |
|---|---|---|---|---|---|
| ^{a} Gew.-% bezogen auf monomeres Styrol. | | | | | |
| ^{b} Gew.-% bezogen auf das Endprokukt. | | | | | |
| ^{c} Minimale Schüttdichte. | | | | | |

## Patentansprüche

1. Expandierbares, treibmittelhaltiges Styrolpolymerisat, das 1 bis 20 Gew.-% eines Expandierhilfsmittels enthält, **dadurch gekennzeichnet, daß** das Expandierhilfsmittel ein bei Raumtemperatur flüssiges oligomeres aliphatisches Olefin mit 2 bis 20 Kohlenstoffatomen und einem zahlenmittleren Polymerisationsgrad von 2 bis 200 ist.

2. Expandierbares Styrolpolymerisat nach Anspruch 1, **dadurch gekennzeichnet, daß** das Expandierhilfsmittel ein Propen- oder Isobuten-Oligomeres mit einem Polymerisationsgrad von 2 bis 100 ist.

3. Expandierbares Styrolpolymerisat nach Anspruch 1, **dadurch gekennzeichnet, daß** das oligomere Olefin endständige Doppelbindungen aufweist.

4. Verfahren zur Herstellung von perlförmigen expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren und unter Zusatz eines Treibmittels und 1 bis 20 Gew.-%, bezogen auf die Monomeren, eines Expandierhilfsmittels, **dadurch gekennzeichnet, daß** das Expandierhilfsmittel ein bei Raumtemperatur flüssiges oligomeres aliphatisches Olefin mit 2 bis 20 Kohlenstoffatomen und einem zahlenmittleren Polymerisationsgrad von 2 bis 200 ist.

5. Verfahren zur Herstellung von perlförmigen expandierbaren Styrolpolymerisaten durch Extrusion einer Schmelze eines Styrolpolymerisats unter Zusatz von Treibmittel und 1 bis 20 Gew.-%, bezogen auf das Styrolpolymerisat, eines Expandierhilfsmittels und Abkühlen und Zerschneiden des extrudierten Stranges, **dadurch gekennzeichnet, daß** das Expandierhilfsmittel ein bei Raumtemperatur flüssiges oligomeres aliphatisches Olefin mit 2 bis 20 Kohlenstoffatomen und einem zahlenmittleren Polymerisationsgrad von 2 bis 200 ist.

## Claims

1. An expandable styrene polymer which contains blowing agent and from 1 to 20% by weight of an expansion assistant, wherein the expansion assistant is an oligomeric aliphatic olefin which is liquid at room temperature and has 2 to 20 carbon atoms and a number average degree of polymerization of from 2 to 200.

2. An expandable styrene polymer as claimed in claim 1, wherein the expansion assistant is a propene or isobutene oligomer having a degree of polymerization of from 2 to 100.

3. An expandable styrene polymer as claimed in claim 1, wherein the oligomeric olefin has terminal double bonds.

4. A process for the preparation of expandable styrene bead polymers by polymerization of styrene, if required in the presence of further comonomers, in aqueous suspension in the presence of suspension stabilizers and conventional styrene-soluble polymerization catalysts and with the addition of a blowing agent and from 1 to 20% by weight, based on the monomers, of an expansion assistant, wherein the expansion assistant is an oligomeric aliphatic olefin which is liquid at room temperature and has 2 to 20 carbon atoms and a number average degree of polymerization of from 2 to 200.

5. A process for the preparation of expandable styrene bead polymers by extrusion of a melt of a styrene polymer with the addition of blowing agent and from 1 to 20% by weight, based on the styrene polymer, of an expansion assistant and cooling and cutting the extruded strand, wherein the expansion assistant is an oligomeric aliphatic olefin which is liquid at room temperature and has 2 to 20 carbon atoms and a number average degree of polymerization of from 2 to 200.

## Revendications

1. Polymère de styrène, expansible et contenant un porogène, qui contient 1 à 20% en poids d'un auxiliaire d'expansion, **caractérisé en ce que** l'auxiliaire d'expansion est une oléfine aliphatique oligomère liquide à la température ambiante, ayant 2 à 20 atomes de carbone et avec un taux de polymérisation moyen en nombre de 2 à 200.

2. Polymère de styrène expansible selon la revendication 1, **caractérisé en ce que** l'auxiliaire d'expansion est un oligomère du propène ou de l'isobutène avec un taux de polymérisation de 2 à 100.

3. Polymère de styrène expansible selon la revendication 1, **caractérisé en ce que** l'oléfine oligomère présente des doubles liaisons terminales.

4. Procédé de préparation de polymères expansibles de styrène, en perles, par polymérisation de styrène, le cas échéant avec utilisation conjointe d'autres comonomères, en suspension aqueuse en présence de stabilisants de suspension et des catalyseurs usuels de polymérisation solubles dans le styrène, et avec addition d'un porogène et 1 à 20% en poids, sur base des monomères, d'un auxiliaire d'expansion, **caractérisé en ce que** l'auxiliaire d'expansion est une oléfine aliphatique oligomère liquide à la température ambiante, ayant 2 à 20 atomes de carbone et avec un taux de polymérisation moyen en nombre de 2 à 200.

5. Procédé de préparation de polymères expansibles de styrène, en perles, par extrusion d'une masse fondue d'un polymère de styrène et addition d'un porogène et de 1 à 20% en poids, sur base du polymère de styrène, d'un auxiliaire d'expansion, et refroidissement et découpage des brins extrudés, **caractérisé en ce que** l'auxiliaire d'expansion est une oléfine aliphatique oligomère liquide à la température ambiante, ayant 2 à 20 atomes de carbone et avec un taux de polymérisation moyen en nombre de 2 à 200.
